# EUROPÄISCHE PATENTANMELDUNG

(11) **EP 4 715 686 A1**
(43) Veröffentlichungstag der Anmeldung: **25.03.2026**
(21) Anmeldenummer: 24201455.3
(22) Anmeldetag: 19.09.2024
(51) Int. Cl.: G06N 5/045, G06N 3/091, G06N 3/045, G06N 3/0475

(54) **COMPUTERIMPLEMENTIERTES VERFAHREN ZUR ADAPTION DES VERHALTENS EINES OPAKEN SYSTEMS**

(71) Anmelder: Siemens Aktiengesellschaft, 80333 München (DE)
(72) Erfinder: Büttner, Florian, 60316 Frankfurt (DE); Decker, Thomas, 85716 Unterschleißheim (DE); Greisinger, Christian, 91217 Hersbruck (DE); Köbler, Alexander, 90461 Nürnberg (DE); Thon, Ingo, 85630 Grasbrunn (DE)
(74) Vertreter: Siemens Patent Attorneys

(57) **Zusammenfassung**

Mit der vorgeschlagenen Lösung wird das Konzept eines GenAl-basierten Assistenten von aktuellen Anwendungen auf regulären, leicht interpretierbaren Maschinen auf datengetriebene und komplexe opake Systeme übertragen. So können zukünftigeGen-Al basierte Industrieassistenten eine ganzheitliche Abdeckung aller Systeme in einer Fertigungsumgebung darstellen. Dieses Umfeld ist zunehmend mit komplexen datengetriebenen Lösungen ausgestattet.

im Vergleich zu bestehenden Ansätzen reduziert der Einsatz von Foundation Models zur Erleichterung einer halbautomatischen Anpassung, bei der Benutzereingaben nur dann abgefragt werden, wenn das kodierte oder dem FM zur Verfügung gestellte Wissen unzureichend ist, den Bedarf an menschlicher Beteiligung drastisch. Das Verfahren, das das Foundation Model nur während der Anpassungs- und Wartungsschritte, aber nicht während der Inferenz erfordert, ermöglicht es, die Vorteile der Foundation Models auf Anwendungen zu übertragen, in denen derzeit aufgrund von Rechenanforderungen und der Notwendigkeit kurzer Reaktionszeiten Foundation Models nicht direkt verwendet werden können.

## Beschreibung

In fast allen Lebensbereichen gibt es derzeit große Bestrebungen, auf Generativer Künstlicher Intelligenz, sogenannte GenAl-basierte Assistenten zu entwickeln, die den Menschen bei seinen beruflichen oder privaten täglichen Aufgaben unterstützen. Bekanntestes Werkzeug ist derzeit "Chat GPT", eine KI-basierte Software die nach Eingabe von passenden Abfragen (sogenannten Prompts) eine Antwort in Textform erzeugt. Weitere Entwicklungen, wie die Generierung von Bildern oder Videos sind ebenfalls zu beobachten und werden in Kürze in ausreichend guter Qualität zur Verfügung stehen, beispielsweise DALL-E. Es werden immer spezialisiertere Anwendungsfelder gefunden, beispielsweise Durable, zur Erstellung von Webseiten.

Mit der Entwicklung von "Industrial Copiloten for Operations" hat sich Siemens zum Ziel gesetzt, das Konzept auf den industriellen Bereich und für ihre Tools zu übertragen. Eines der Hauptanwendungsfelder, die im Fokus stehen, ist die Unterstützung von Mitarbeitern bei der Wartung komplexer Maschinen (z. B. Roboter) in einer Fabrik. Eine mögliche Ausgabe des Assistenten kann dann die Empfehlung, eine Variable im Programm der Steuerung anzupassen, oder eine defekte Hardwarekomponente zu ändern. Diese Anpassungen können dann beispielsweise von entsprechend geschultem Fachpersonal durchgeführt werden.

Diese momentane Herangehensweise gerät allerdings an ihre Grenzen, wenn man es mit einer Black Box oder einem datengetrieben und für den Nutzer weitestgehend undurchsichtigen, im Weiteren auch "opak" genannten System zu tun hat, welches es nicht erlaubt, interpretierbare Systemvariablen anzupassen oder Teile auszutauschen, da bereits die Änderung nur einer Variablen nicht-vorhersehbare Effekte auf den Output des Systems hat.

Dennoch nimmt der Einsatz solcher opaken Systeme auf dem Shopfloor (also in der Fertigungsanlage und Steuerung) stetig zu, (beispielsweise bei sogenannten Brownfield-Anwendungen) und diese Entwicklung wird durch die Bestrebungen hin zu einer autonomen Fabrik noch weiter beschleunigt. Die genannten Systeme sind genau wie herkömmliche Systeme anfällig für Veränderungen in ihrer Umgebung. In einem einfachen Beispiel wird ein auf maschinellem Lernen basierendes Computer-Vision-System stark von Änderungen der Lichtverhältnisse betroffen, hervorgerufen etwa durch eine Änderung der Beleuchtung oder durch Staub in der Luft. Ein System, das einen Produktionsprozess überwacht, wird in der Regel durch eine Änderung des produzierten Produkts beeinflusst. Die Wiederherstellung zuverlässiger Ergebnisse unter diesen Umständen erfordert eine Anpassung des Systems. Dies ist jedoch oft mühsam, zeitaufwändig und erfordert viel Know-how, was in Zeiten des Fachkräftemangels zusätzlich große Herausforderungen mit sich bringt.

Die derzeit gängige Praxis zur Anpassung opaker Machine Learning (ML)-basierter Systeme an neue Umgebungen besteht darin, viele neue Daten zu sammeln und das Modell damit erneut zu trainieren.

Die Optimierung von nicht ML-basierten Systemen kann im einfachsten Fall sogar auf Ausprobieren hinauslaufen, wenn der Bediener nicht über fundiertes Fachwissen über das Verhalten des Systems verfügt.

Für Modelle des maschinellen Lernens wurden über das Paradigma des eXplanatory Interactive Machine Learning (XIL) genauere Anpassungsmethoden eingeführt. Dies wird beispielsweise von Stefano Teso und Kristian Kersting beschrieben in dem Artikel "Explanatory interactive machine learning." in "Proceedings of the 2019 AAAI/ACM Conference on Al, Ethics, and Society". 2019.

In XIL entfaltet sich die Interaktion zwischen Menschen und dem maschinellen Lernmodell typischerweise wie folgt:
Das ML-Modell wertet einen Datenpunkt aus, sagt eine Bezeichnung voraus und bietet dem Benutzer Erklärungen für seine Vorhersage. Der Benutzer reagiert, indem er diese Erklärung manuell korrigiert

Um Erklärungskorrekturen zu integrieren, wird aktives Lernen verwendet, bei dem menschliche Anpassungen an Erklärungen eine zusätzliche Quelle für Feedback sind. In ihrer Arbeit übersetzen die Autoren Erklärungskorrekturen in eine Reihe von Gegenbeispielen, die darauf abzielen, dem ML-Modell beizubringen, irrelevante Komponenten zu ignorieren. Diese Gegenbeispiele randomisieren Merkmale, die vom ML-Modell hervorgehoben werden, aber vom Benutzer bei der Erläuterung der entsprechenden Vorhersage als irrelevant erachtet werden.

Ein weiterer Ansatz wird beschrieben durch, Andrew Slavin Ross, Michael C. Hughes, und Finale Doshi-Velez. "Right for the right reasons: Training differentiable models by constraining their explanations." arXiv preprint arXiv:1703.03717 (2017).

In diesem Ansatz wird die Verwendung einer zusätzlichen Verlustfunktion bei der Optimierung eines ML-Modells vorgeschlagen. In maschinellen Lernmodellen wird die Verlustfunktion bzw. die Kostenfunktion verwendet, um den Fehler zwischen den Vorhersagen eines Modells und den tatsächlichen Ausgaben zu messen. Diese Hilfsverlustfunktion verhindert Parameteranpassungen, die zu hervorgehobenen Merkmalen durch das ML-Modell führen, aber anschließend vom Benutzer als irrelevant erachtet werden. Irrelevante Bereiche werden über eine vom Benutzer bereitgestellte Binärmaske des Bildes angegeben.

Im Gegensatz dazu bieten einige neuere XIL-Ansätze Alternativen, die keine Bildkommentierung erfordern. Anstatt Bildbereiche zu verwenden, können Benutzer mit neurosymbolischen Konzepten in Form von logischen Regeln interagieren, beispielsweise beschrieben in "Right for the right concept: Revising neuro-symbolic concepts by interacting with their explanations".von Wolfgang Stammer, Patrick Schramowski, and Kristian Kersting, veröffentlicht in " Proceedings of the IEEE/CVF conference on computer vision and pattern recognition, 2021.

Die genannten Ansätze verwenden keine natürliche Sprache als Interaktionsmethode. Die natürliche Sprache überträgt jedoch das Reasoning des opaken Systems in die Sprache des Domänenexperten und bietet eine intuitive Benutzeroberfläche. Darüber hinaus bietet die natürliche Sprache eine viel reichhaltigere Form der Benutzeroberfläche als einfache Erklärungen im Eingaberaum wie Bildbereiche, was Beschreibungen ermöglicht, die über Bildbereiche hinausgehen.

Noch wichtiger ist, dass das vorgeschlagene Vorgehen das Wissen, das kodiert oder dem Grundmodell (Foundation Model FM) zur Verfügung gestellt wurde, verwendet, um die opaken Systeme nach Möglichkeit autonom anzupassen, und nur in einer reduzierten Anzahl von Fällen Benutzereingaben erfordert. Dies reduziert den menschlichen Aufwand für die Anpassung des Systems weiter.

Gu, Zhaopeng et al. schlägt in "AnomalyGPT: Detecting Industrial Anomalies using Large Vision-Language Models." AAAI Conference on Artificial Intelligence (2023) eine Methode vor, die ein Large Vision Language Model LVLM verwendet, um Erklärungen für die Vorhersage eines maschinellen Lernmodells in natürlicher Sprache zu generieren. Dieser Ansatz erfordert ein LVLM während des Einsatzes, was hohe Rechenanforderungen an das Verfahren stellt, wofür die meisten industriellen Anwendungen derzeit nicht ausreichend Rechenkapazitäten breitstellen. Noch wichtiger ist, dass in dem Paper keine Optimierung des ML-Modells auf der Grundlage des Feedbacks des Benutzers oder des LVLM betrachtet wird.

Keiner der oben genannten Ansätze überträgt das jeweilige Konzept auf Anwendungen außerhalb von ML-Modellen, es wird ein Grundmodell (FM) eingesetzt um Systeme anzupassen, bei denen es sich um klassische Machine Learning Modelle handelt. Diese Ansätze könnten bei geeeigneter Anpassung auch für andere Black-Box Systeme in Industriellen Anwendungen verwendet werden (z. B. Smart Grids, Maschinenwartungssysteme, Automatisierungssysteme in der Fertigung, ...)

Es ist Aufgabe der Erfindung, diese Lücke zu schließen.

Diese Aufgabe wird gelöst durch ein Verfahren mit den Merkmalen des Patentanspruchs 1. Weiterhin wird die Aufgabe gelöst durch ein Computerprogrammprodukt gemäß den Merkmalen den Patentanspruchs 13 und ein Assistenzsystem gemäß den Merkmalen des Patentanspruchs 14.

Weitere vorteilhafte Ausführungsformen werden in den Unteransprüchen beansprucht.

Das Computerimplementierte Verfahren zur Adaption des Verhaltens eines opaken Systems, mit einem maschinellem Lernmodell zur Durchführung einer Analyseaufgabe in einem technischen System, weist folgende Schritte auf:
a) Auswerten von Eingabe-Daten aus dem opaken System (durch einen Systeminterpreter) 24 und Generieren einer Erklärung der Schlussfolgerung des opaken Systems (Reasoning), insbesondere in Kombination mit dem System,
b) Generieren von Korrekturwerten zu dem Reasoning (als Schlussfolgerung) des opaken Systems mit den Eingabe-Daten durch ein Grundlagenmodell welches nicht aufgabenspezifisch vortrainiert ist, (in der Korrekturstufe)
c) Bewerten der Interpretation und der Korrekturen und generieren eines Korrektursignal basierend auf der ermittelten Differenz der Interpretation und der Korrekturen und
d) Rückgabe des Korrektursignals an das opake System, zur Adaption des Steuerungssignals an das technische System.

Unter "Reasoning" versteht man prinzipiell die Ausgabe der Interpretation von Eingabe-Daten, beispielsweise vom vorherigen Verfahrens-Schritt gemeint, also als Schlussfolgerung.

Das vorgestellte Verfahren bietet eine verbesserte Schnittstelle für die Anpassung von opaken softwarebasierten Systemen mit maschinellen Lernmodellen, aber auch Smart Grids, Maschinenwartungssysteme oder Automatisierungssysteme in der Fertigung an.

Um dies zu erreichen, kombinieren wir eine modellagnostische Erklärungsmethode mit einem Grundlagenmodell (Foundation-Modell FM).

Der Zweck des Grundlagenmodells besteht darin, als auf großen Datenmengen vortrainiertes, verallgemeinertes Modell zu dienen, das für verschiedene nachgelagerte Aufgaben in der Verarbeitung, feinabgestimmt oder direkt verwendet werden kann.

Herkömmliche KI-Modelle werden in der Regel für eine bestimmte Aufgabe anhand eines bestimmten Datensatzes trainiert. Grundlagenmodelle hingegen werden auf umfangreichen Datensätzen vortrainiert: Dadurch können sie im Vergleich zu Modellen, die auf kleineren, aufgabenspezifischen Daten trainiert wurden, verallgemeinerungsfähige Darstellungen erlernen.

Sie sind für verschiedene Anwendungsfälle nutzbar oder anpassbar. Einmal trainiert, können sie durch zusätzliches Training mit weniger Daten für verschiedene nachgelagerte Aufgaben feinabgestimmt werden. Dies spart Zeit und Ressourcen im Vergleich zum Training eines neuen Modells von Grund auf für jede Aufgabe.

Das Grundlagenmodell verwendet Domänenwissen, welches während des Vortrainings aus gro-ßen Datenmengen gelernt wurde, um die Erklärung des opaken Systems für eine bestimmte Vorhersage und Eingabe zu korrigieren. Das dem Grundlagenmodell FM zur Verfügung gestellte Domänenwissen kann bei einer industriellen Anlage, die später in dem Ausführungsbeispiel näher beschrieben ist, beispielsweise aus Beschreibungen der Operational Design Domain (ODD) oder anderen Spezifikationen des Gesamtprozesses und der Anforderungen an das System bestehen. Wenn das Grundlagenmodell FM nicht in der Lage ist, die Erklärung ausreichend zu korrigieren, kann ein menschlicher Experte konsultiert werden, der über eine intuitive Benutzeroberfläche verfügt, um mit dem System in natürlicher Sprache zu interagieren. Der Typ des Grundlagenmodells FM hängt von den Eingabedaten ab und kann entweder ein Large Language Model (LLM) oder ein Large Vision Language Model (LVLM) sein. Der Ausgang des Grundlagenmodells FM wird mit der ursprünglichen Erklärung des opaken Systems für den gegebenen Eingang verglichen. Die resultierende Abweichung zwischen dem korrigierten Reasoning und dem Reasoning des opaken Systems wird anschließend verwendet, um die Parameter des opaken Systems anzupassen.

Ein Assistenzsystem, das die beschriebenen Vorteile ermöglicht, sollte die folgenden Anforderungen erfüllen:
- Das Grundlagenmodell / Foundation Model FM sollte für die eigentliche Aufgabe des opaken Systems nicht erforderlich sein, um eine geringe Latenz und einen geringen Rechenaufwand des eingesetzten Systems während der Inferenz zu gewährleisten. Das Grundlagenmodell kommt nur dann zum Einsatz, wenn eine Korrektur des opaken/Black-box Systems notwendig ist. Dies kann dann der Fall sein, wenn z. B. durch Datendrift die Performanz des Systems abnimmt. Nach dem Korrekturvorgang kann das Grundlagenmodell dann wieder abgeschlossen werden und die Veränderungen im System durch das Grundlagenmodell bleiben permanent. Das System funktioniert also in allen anderen Schritten unabhängig vom Grundlagenmodell.
- Das Assistenzsystem sollte verschiedene Arten von opaken Systemen zulassen (z. B. differenzierbar und nicht differenzierbar Modelle)
- Das Grundlagenmodell FM sollte kein umfangreiches Training in Bezug auf die Aufgabe des opaken Systems benötigen
- Das opake System muss Zugriff auf interne Parameter bieten. Ihre Auswirkungen auf die Funktion des opaken Systems müssen jedoch nicht direkt für den jeweiligen Benutzer interpretierbar sein, der für die Wartung des Systems verantwortlich ist. Diese Anforderung steht in direktem Zusammenhang mit den meisten Modellen des maschinellen Lernens, aber auch mit anderen komplexen Steuerungs- und Analysesystemen.

Die Erfindung wird im Weiteren auch durch die Figuren erläutert.

Dabei zeigt
Figur 1 einen Überblick über die Architektur und Funktionalität
Figur 2 eine Ausführungsmöglichkeiten mit Konvertierung in den Bildraum
Figur 3 eine Ausführungsmöglichkeiten ohne Konvertierung in den Bildraum
Figur 4 das opake System mit System-Interpreter.

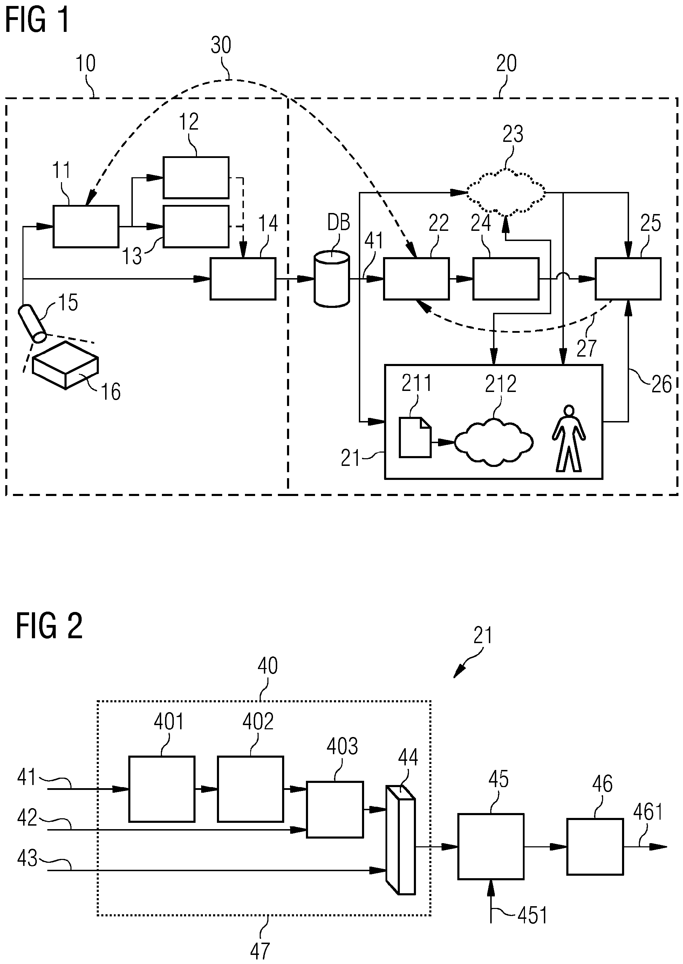

Zuerst betrachten wir Figur 1, die einen Überblick über die Architektur bietet. Die Elemente im gestrichelten Feld auf der linken Seite, 10, zeigen ein bereits vorhandenes System in der sogenannten Shopfloor oder Edge-Umgebung, das neben der Steuerung einer Produktionsanlage unter anderem eine Analyseaufgabe ausführt, beispielsweise eine visuelle Qualitätsprüfung in der Fertigungsumgebung, die die Produktqualität am Ende einer Produktionslinie, beispielsweise durch optische Inspektion eines hergestellten Produkts 16 abschätzt. In dem dargestellten Aufbau werden optische Sensoren 15, beispielsweise Scanner oder Kameras, eingesetzt, um relevante Größen eines industriellen Prozesses zu erfassen. Die resultierenden Daten, beispielsweise Bilder (auch mit Röntgen oder ähnlichen Techniken) oder Videos, werden anschließend in ein opakes System 11 eingespeist, um auf eine Eigenschaft des untersuchten Prozesses zu schließen. Der Output des opaken Systems 11 wird anschließend einer nachgelagerten Aufgabe (Downstream Task) 13 zugeführt, die der weiteren Verwendung dient.

Ein Beispiel für ein solches Opakes System ist ein Modell des maschinellen Lernens, das die Qualität des Outputs einer Produktionslinie in einer Industriellen Anlage vorhersagt. Die Produktionslinie besteht aus verschiedenen Assets, beispielsweise Transportbändern und Bearbeitungsmaschinen, bei denen physikalische Größen, wie Temperatur oder Druck, von verschiedenen Sensoren 15 gemessen werden. Das Gesamtsystem kann eine Form von Überwachungssystem (Monitoring System) 12 enthalten, welches die Qualität der Ausgaben des opaken Systems überwacht und eine Wartung indiziert so bald eine vordefinierte Anforderung an die Qualität, beispielsweise Prädiktionsgenauigkeit, unterschritten ist.

Um das Modell anpassen zu können, wenn die Ausgabequalität nachgelassen hat, werden Eingabedaten (lokal oder remote) nicht nur in das Opake System eingespeist, sondern auch in einer Datenbank DB gespeichert, z. B. in einem Cloud-Speicher. Mit "Eingabedaten" sind alle Daten gemeint, die dem opaken System als Input bereitgestellt werden. Wenn das opake System beispielsweise ein Faltendes Neuronales Netz (CNN) für industrielle Bildverarbeitungsanwendungen ist, werden die Eingangsbilder in der Datenbank (DB) gespeichert.

Um die Anzahl der zum speichernden Datensätze zu reduzieren, das betrifft sowohl den Speicher-Platz als auch die Anzahl der Zugriffe, kann zusätzlich eine Filterstufe 14 eingeführt werden. Diese Filterstufe kann z. B. ein Maß verwenden, das die Unsicherheit des opaken Systems über die Vorhersage für die jeweilige Instanz quantifiziert, wobei nur Instanzen gespeichert werden, denen eine hohe Vorhersageunsicherheit zugewiesen ist. Alle enthaltenen Elemente außerhalb der Datenbank können dabei auf der Edge bereitgestellt werden. Unter Edge-Geräte versteht man dabei alle Geräte außerhalb der Cloud, sie befinden sich an der Grenze zwischen digitalen Prozessen und der physischen Umgebung, nehmen Anweisungen von Endnutzern entgegen und senden Informationen zurück. Sie überwachen und steuern die Maschinen. Sie zeichnen messbare Phänomene auf und wandeln sie in nutzbare Daten um.

Die Komponenten auf der rechten Seite 20 bilden ein Assistenzsystem für die Adaption des opaken Systems 11, 22. Dieses Assistenzsystem kommt nur zum Einsatz, wenn das opake System 11, 22 an neue Umgebungsbedingungen angepasst werden muss und ist während des regulären Einsatzes des Systems nicht notwendig, solange keine Qualitätsverluste in dem System festgestellt werden konnten.

Die Komponenten können sich entweder in einer Edge- oder Cloud-Umgebung befinden, oder als verteiltes System konzipiert sein, bei dem sich z. B. das opake System 22 auf einem Edge-Gerät befindet, die Datenbank DB und die erforderlichen Grundlagenmodelle FMs 23, 212 jedoch auf einem Cloud-Server gehostet werden.

Zusätzlich wird für den Zugriff auf Vorhersagen und Parameter des opaken Systems ein Systeminterpretermodul 24 benötigt, ein Auswertemodul 25 und eine Korrekturstufe 21 einschließlich zumindest eines Grundlagenmodells 212. In einer weiteren Ausführungsform kann ein zweites Grundlagenmodell FM, 23 erforderlich sein, was weiter unten in einer Ausführungsform noch genauer beschrieben wird.

Zusätzlich kann das zweite Grundlagenmodell FM, 23 auch das erste Grundlagenmodell unterstützen, indem es einen Teil der Aufgaben abnimmt. Somit kann z. B. das erste Grundlagenmodell eine umfassende Beschreibung über das Reasoning des ML Modelles basierend auf die Ausgabe des Systeminterpreter-Modul 24 geben. Das zweite Grundlagenmodell FM, 23 kann dann auf basis des Outputs vom ersten Grundlagenmodell eine Beschreibung darüber liefern, wie gut die Antwort des ersten Grundlagenmodelles bestimmten selbst vordefinierten Regeln folgt. Beide Outputs der Grundlagenmodelle können anschließend als Korrektursignal verwendet werden. Zwei unterschiedliche Modelle zu nutzen kann also helfen, eine höhere Diversität in den Antworten zu bekommen. Ein GPT4 und ein GPT3 Modell erkennen beispielsweise evtl. unterschiedliche Bereiche als wichtig an.

Das Systeminterpreter-Modul 24 generiert eine Form von Interpretationen für das Reasoning des Modells, das zu einer bestimmten Ausgabe führt. Die Daten welche zunächst in einer Datenbank (DB) vorliegen, werden durch das opake System geschickt, das anschließend die bestimmte Ausgabe bzw. eine Vorhersage erzeugt. Auf Basis dieser Vorhersagen können dann die Interpretationen generiert werden.

Dies kann durch eine Erklärungsmethode realisiert werden, die entweder modellspezifisch oder gradientenbasiert ist, wie z. B. mit Class Activation Maps, die Bereiche in einem Bild hervorheben, die für die Vorhersage wichtig waren, für Modelle des maschinellen Lernens oder modellunabhängig für jede Art von undurchsichtigem System wie Shapley-Werte, die die Bedeutung einer einzelnen Eingabevariablen für eine Vorhersage anzeigen. Die Inputdaten können aber auch andere Daten, wie beispielsweise Produktionsprozess Daten sein.

Bei gradientenbasierten Erklärungsmethoden wird der Gradient (also die Ableitung) von der Klasse, welche vom System vorhergesagt wurde, berechnet. Damit lässt sich visuell darstellen, welche Teile innerhalb eines Bildes für die Klassifizierung am wichtigsten sind.

Diese Interpretationen, die Ausgabe des opaken Systems und die ursprüngliche Eingabe werden einer Korrekturstufe 21 zur Verfügung gestellt. Wenn möglich, generiert die Korrekturstufe 21 automatisch Korrekturen des Reasoning über ein GrundlagenModell FM 212. Das GrundlagenModell FM kann dabei auf Domänenwissen über die Anwendung zurückgreifen, das sich aus den Daten ableitet, mit denen es trainiert wird.

In spezifischeren Anwendungen, für die das im allgemeinen GrundlagenModell FM kodierte Wissen (z. B. GPT4) begrenzt ist, kann das GrundlagenModell FM mit anwendungsspezifischen Dokumenten wie Handbüchern 211 erweitert werden, z. B. durch gängige Techniken wie Retrieval Augmented Generation (RAG).

Ein Auswertungsmodul 25 wird anschließend verwendet, um die Differenz zwischen der korrigierten Interpretation und der Interpretation durch das Interpretationsmodul zu messen. Das resultierende Differenzmaß wird anschließend als Korrektursignal 27 verwendet, um die Parameter des opaken Systems anzupassen.

Diese Schritte werden wiederholt, bis zumindest eine von drei Bedingungen erfüllt ist:
- Die Leistung des angepassten Modells (also während oder nach der Optimierungsphase) erfüllt die für die Anwendung angegebenen Anforderungen, oder
- ein vordefiniertes Budget für die Anzahl der Anpassungen ist erschöpft. Das Budget kann beispielsweise in Geld, Zeit oder Rechenoperationen gemessen werden, es bezieht sich auf die Anzahl der Datenpunkten, z.B. Bildern, welche für die Optimierung des opaken Systemes mit einbezogen werden. Ein Höheres Budget hat zur Folge, dass die Anzahl an Rechenoperationen und damit auch das Zeit bzw. Geld ansteigt. Allerdings kann die Performance durch Einbeziehen von mehr Mustern / Samples (Höheres Budget) in den Trainingsprozess gesteigert werden.

Anschließend kann das korrigierte Modell in der Produktivumgebung 10 erneut bereitgestellt werden 30.

Während des Optimierungsprozesses werden Metriken angewendet, um die Leistung des Systems zu beobachten. Zum Erfüllen der Anforderungen ist auf der einen Seite eine hohe prädiktive Leistung wichtig, d. h. die Vorhersage des Systems muss gut sein. Auf der anderen Seite soll aber auch der Grund für die Vorhersage stimmen. Ersteres kann durch Metriken wie z. B. Accuracy bestimmt werden, indem das Verhältnis von den richtig vorhergesagten Bildern zu allen Bildern ermittelt wird. Letzteres kann z. B. durch das Korrektursignal 27 bestimmt werden. Während der Optimierung werden Testrunden durchgeführt, welche Bilder, die nicht in den Trainingsprozess mit einbezogen werden, evaluiert und dort die Performance ermittelt.

Im Folgenden werden zwei alternative Realisierungen für das Korrektur- und Bewertungsmodul für Anwendungsfälle in der intelligenten Bildverarbeitung auf Basis eines Machine Learning Modells beschrieben.

Realisierung 1, in Figur 2 dargelegt.

Der Vergleich zwischen dem korrigierten Reasoning und der ursprünglichen Reasoning des Modells erfolgt im Bildraum. Im Bildraum wird das Reasoning häufig als Heatmap dargestellt: Das Systeminterpreter-Modul 24 gibt ein Bild als Reasoning aus, welches die Bereiche markiert, die für eine entsprechende Vorhersage des opaken Systems einen positiven Einfluss haben und ggf. wie stark der positive Einfluss ist.

Für die weiteren Schritte ist eine zusätzliche Vorverarbeitungspipeline 401, 402 erforderlich, die aus einem Segmentierungsmodell (z. B. wiederum ein Grundlagen Model FM), einem Set-of-Mark-Algorithmus (wie beispielsweise von Yang, Jianwei, et al. "Set-of-mark prompting unleashes extraordinary visual grounding in gpt-4v." arXiv preprint arXiv:2310.11441 (2023) beschrieben) und einem Schritt, der diese mit der Modell Reasoning kombiniert, besteht. Das Segmentierungsmodell 401 unterteilt das Bild in semantisch relevante Bereiche, z. B. in einen Hintergrund und verschiedene Objekte im Vordergrund. Diesen Bereichen wird dann durch einen Algorithmus für eine Reihe von Markierungen eine eindeutige Kennung zugewiesen 402. Beispiele wie das Eingangsbild dann in semantisch kohärente Bereiche unterteilt wird, können beispielsweise auf Seite 3 in: "Kirillov, Alexander, et al. "Segment anything." Proceedings of the IEEEICVF International Conference on Computer Vision. 2023" gefunden werden.

Anschließend werden diese Identifikatoren verwendet, um zu beschreiben, welche der semantisch kohärenten Bereiche den Bereichen entsprechen, die das opake System als wichtig erachtet 403. Das Unterteilen in semantisch kohärente Bereiche wird durch ein Grundlagenmodell durchgeführt, welches darauf trainiert worden ist, Bilder in zusammenhängende Bereiche zu segmentieren. Bei diesen zusammenhängenden Bereichen handelt es sich um bestimmte Konzepte von Bildern wie beispielsweise bei einem Vogel der Schnabel, Augen, Kopf, Bauch, Füße, usw.

Diese kombinierten Informationen 44 werden einem Large Vision-Language Model LVLM 45 zur Verfügung gestellt, das aufgefordert wird, das Reasoning auf der Grundlage der identifizierten Bereiche zu korrigieren, beispielsweise indem das Segmentierte Bild und das Bild, welches das Reasoning des Opaken Systems angibt, gemeinsam evaluiert werden. Dies erfolgt durch einen Vergleich, ob sich die semantisch kohärenten Bereiche zumindest teilweise innerhalb der Bereiche befindet, die das Opake System als relevant für seine Vorhersage betrachtet. Danach wird ein Large Vision Language Model LVLM verwendet, um aus den relevanten, semantisch kohärenten Bereichen diejenigen Bereiche zu korrigieren, auf die sich das Opake System mit Bezug auf Allgemein oder Domänenwissen encodiert in dem LVLM nicht für eine korrekte Vorhersage fokussieren sollte.

(Large) Vision Language Models sind Modelle, die gleichzeitig aus Bildern und Texten lernen können, um viele Aufgaben zu bewältigen, von der Beantwortung visueller Fragen bis hin zur Beschriftung von Bildern.

Insbesondere handelt es sich bei der Ausgabe des LVLM um eine Bewertung, wenn ein Bildbereich und damit entsprechender Identifikator, der von dem opaken System als wichtig erachtet wird, tatsächlich nicht wichtig sein sollte oder ein auf das Domänenwissen bezogener Bereich nicht berücksichtigt wird. In dem Fall, dass das LVLM keine ausreichende Bewertung liefert, könnte über eine weitere Datenquelle 451, beispielsweise mittels eines Prompts, die Entscheidung unterstützt werden. Die ausgegebene Bewertung der Identifikatoren wird anschließend wieder in den Bildraum übertragen und mit dem ursprünglichen Reasoning verglichen. Die Abweichung wird als Korrektursignal 461 für das opake System verwendet.

Das Korrektursignal wird für jedes Bild einzeln berechnet, und gibt an, wie gut die Erklärung des Opaken Systemes mit der idealen Erklärung übereinstimmt. Bei einer niedrigen Übereinstimmung ist die Erklärung schlecht und bei einer hohen Übereinstimmung gut. Das Ziel ist es, während der Optimierung des opaken Systemes mit dem Grundlagenmodell FM, die Übereinstimmung zu maximieren.

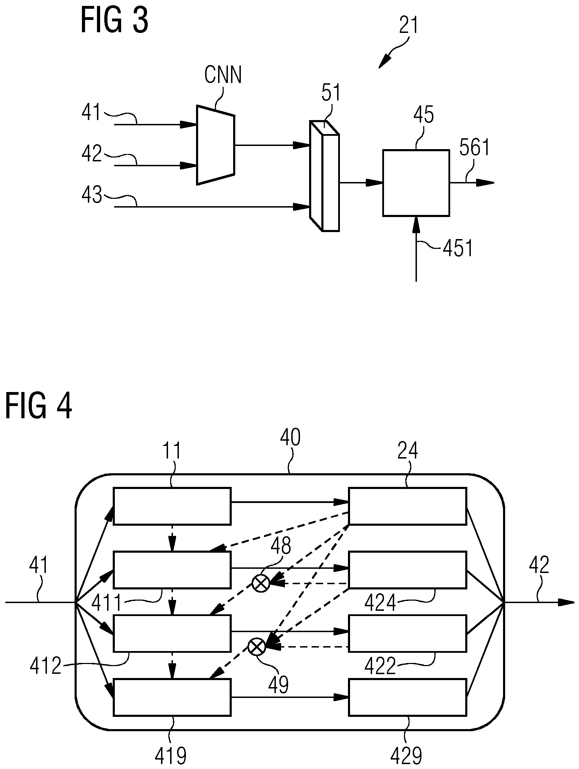

Realisierung 2, in der Figur 3 näher beschrieben:
Der Vergleich zwischen dem korrigierten Reasoning und dem ursprünglichen Reasoning des Modells erfolgt in natürlicher Sprache, 46.

In diesem Fall wird das ursprüngliche Eingabebild 41 ohne weitere Vorverarbeitung, (anders als in Realisierung 1), mit dem Reasoning des opaken Systems 42, z. B. unter Verwendung eines Convolutional Neural Network CNN, kombiniert 51, bevor es direkt in das LVLM 45 eingespeist wird. Das LVLM wird dann aufgefordert, die korrekte Logik für die gegebene Eingabe auszugeben, dieerste Abfrage. Wenn das Modell nicht in der Lage ist, das richtige Reasoning ausreichend zu identifizieren, kann durch weitere Informationsquellen die Entscheidung unterstützt werden, 451. Es kann beispielsweise ein Experte befragt werden. Bei dieser Option muss das ursprüngliche Reasoning des Modells durch eine zweite Abfrage auf einem LVLM in natürliche Sprache übertragen werden. Dabei kann es sich um das gleiche 212 oder ein anderes Modell 23 als bei der ersten Eingabe handeln.

Das Auswertungsmodul quantifiziert nun die Abweichung zwischen dem ursprünglichen Reasoning und dem von der Korrekturstufe erzeugten, korrigierten Reasoning. Um ein aussagekräftiges Maß für die Differenz zwischen den Schlussfolgerungen in natürlicher Sprache zu erhalten, werden beide Ausgaben semantisch mit einem LLM kodiert.

Die FM sind in dieser Ausführungsform große Sprachmodelle (LLM oder LVLM), die auf Basis von natürlicher Sprache arbeiten, d.h. die Grundlage der Methode muss auch die natürliche Sprache sein, selbst wenn sie an der Stelle nicht nach außen sichtbar gemacht wird.

Der Abstand zwischen den Kodierungen kann nun über ein gängiges Abstandsmaß, z. B. den Kosinusabstand, gemessen werden. Das LLM ist im Auswertungsmodul enthalten, welches die Informationen in natürlicher Sprache so encodiert, dass ein Korrektursignal 461 erzeugt werden kann, um die Parameter des opaken Systems zu optimieren.

Bei der zweiten Option, wenn der Zugriff auf die Parameter des Grundlagenmodell FM möglich ist, kann das Korrektursignal zurück in das opake System propagiert werden und die entsprechenden Parameter können mit gradientenbasierten Methoden, wie z. B. Gradient Descent, optimiert werden. Bei der ersten Option ist dies nicht möglich.

Falls die Optimierung mit gradientenbasierten Methoden erfolgt, muss das komplette System differenzierbar sein, was einen Zugriff auf die Parameter des Grundlagenmodell FM erfordert.

Bei nicht-gradientenbasierten Möglichkeiten, muss diese Voraussetzung nicht erfüllt sein, da die Parameteränderungen im opaken System basierend auf die Veränderung des Korrektursignales abgeschätzt werden können, und somit keinen Zugriff auf die Parameter des Grundlagenmodell FM erfordern.

In vielen Fällen werden die Grundlagenmodelle FMs jedoch tatsächlich auf einem externen Cloud-Dienst bereitgestellt und bieten nur API-Zugriff auf Abfrageergebnisse, z. B. ist dies bei der API von Drittanbietern von großen Sprachmodellen für die FM-Modelle der Fall. In diesen Fällen ist kein Zugriff auf die Grundlagenmodell FM-Parameter möglich und somit können Gradienten in Bezug auf das Korrektursignal nicht durch das FM an das opake System weitergeleitet werden. In diesem Fall können die Parameter jedoch mit nicht-gradientenbasierten Methoden, wie z. B. der Partikelschwarmoptimierung oder genetischen Algorithmen, optimiert werden. Auch wenn diese Methoden nicht ausreichen, um große neuronale Netze von Grund auf neu zu trainieren, können sie in unserem Fall eine praktikable Alternative bieten, da nur geringfügige Anpassungen an den Parametern eines bereits trainierten Modells vorgenommen werden, um die fehlerhafte Vorhersageargumentation in einer Teilmenge von Beispielen zu beheben. Für opake Systeme mit einer geringen Anzahl von Parametern sind nicht-gradientenbasierte Methoden ohnehin eine gute Wahl. Nicht-gradientenbasierte Methoden arbeiten oftmals mit Abschätzungen oder zufälligen Änderungen der Parameter, daher ist eine sehr große Anzahl an Parametern bezüglich der Perfomanz dieser Methoden hinderlich (wegen der schlechten Skalierbarkeit), da es diesen Methoden schwerer fällt, die Zusammenhänge auf das Korrektursignal zu bekommen im Vergleich zu traditionell gradientbasierten Methoden, bei denen Richtung und Betrag der Gradienten vorgegeben wird, um das Korrektursignal zu verbessern.

Gradientenbasierte und nicht-gradientenbasierte Optimierungsmethoden erfordern eine Neuberechnung des Korrektursignals in jedem Schritt. Dies führt zu einer großen Anzahl erforderlicher LVLM-Abfragen, die in einigen Szenarien aufgrund explodierender Kosten oder einer daraus resultierenden großen Trainingszeit möglicherweise nicht durchführbar sind.

Eine Möglichkeit, die Anzahl der erforderlichen Abfragen zu reduzieren, besteht darin, das System Reasoning mehrerer Eingabebeispiele zu einem repräsentativen Prototyp zusammenzufassen. Dies kann beispielsweise durch Clustern der Systeminterpretationen erfolgen, z. B. in Form von Erklärungen, wobei jedes Cluster semantisch kohärente Erklärungen des Modell Reasonings darstellt. Für das Clustering können bekannte Algorithmen wie z. B. K-Means verwendet werden (https://de.wikipedia.org/wiki/K-Means-Algorithmus).

Ein Prototyp dieser Cluster kann dann generiert werden, z. B. durch Berechnung des Schwerpunkts des Clusters oder durch samplen eines Repräsentanten. Der Prototyp wird dann anstelle jeder Probe in das LVLM eingespeist, was einen Proxy für das Korrektursignal für alle Entitäten im Cluster ergibt.

Wenn die Zusammenfassung der System Logik aufgrund eines sehr begrenzten Budgets für die Abfrage des LVLM immer noch nicht ausreicht, kann ein dritter Ansatz verwendet werden, der auf dem Modul Opakes System & System-Interpreter 40 basiert und in der Figur 4 dargestellt ist. Hier wird eine Methode verwendet, um eine Auswahl von opaken Systemen 11, 411, 412, 419 mit unterschiedlichen Eigenschaften zu generieren, was zu einer Vielzahl von Erklärungen für eine bestimmte Probe, z. B. einem Bild, führt. Diese Methode kann durch einen iterativen Prozess vorgegeben sein, bei dem für jedes nachfolgende opake System 411, 412, 419 der Teil der Eingabe entfernt wird 48, 49, der von dem vorherigen als wichtig erachtet wird. Durch diesen Ansatz sind nachfolgende Systeme gezwungen, sich auf andere Eingaben zu verlassen als frühere Systeme. Der iterative Prozess wird gestoppt, sobald sich die Leistung der resultierenden Systeme 421, 422, 429 auf einen zuvor festgelegten Schwellenwert verschlechtert. Bei auf maschinellem Lernen basierenden Methoden können die Modelle alternativ parallel trainiert werden, wobei ein zusätzliches Trainingsziel berücksichtigt wird, das eine Unstimmigkeit zwischen ihren Erklärungen erzwingt.

Nach diesem Schritt werden die Erklärungen der resultierenden Systeme wie oben beschrieben vom LVLM ausgewertet und das Modell verwendet, das den Proben mit dem geringsten Korrektursignal über eine vordefinierte Anzahl von Proben entspricht.

Die Auswahl der Beispiele, an denen das LVLM den Vergleich 48, 49 zwischen der Logik des alten Systems 11 und der Logik der neuen Systeme 411, 412, 419 durchführt, die von den verschiedenen opaken Systemen erzeugt wird, kann durch die Identifizierung und Fokussierung auf Beispiele erfolgen, bei denen das generierte Systemensemble am stärksten abweicht. Unter einem Systemensemble versteht man alle vorhandenen opaken Systeme, die am Ende jedes einzelnen Iterationsschrittes vorhanden sind.

Da das Opake System in jedem Iterationsschritt so angepasst wird, dass es sich nicht mehr auf seine eigenen, vorhergehenden Erklärungen verlassen soll, sind also viele verschiedene Opake Systeme vorhanden, die alle die korrekte Vorhersage liefern, die aber unterschiedliche Gründe haben. Ziel ist es hierbei das Opake System in diesem Systemensemble zu finden, welches die besten richtigen Erklärungen liefert.

### Bezugszeichenliste

- 10: existierendes Gesamt-System
- 11: opakes System
- 12: Überwachungssystem
- 13: Nachgelagerte Aufgabe (Downstream Task)
- 14: Instanzen-Filter
- 20: Anpassungs-Assistent
- 21: Korrekturstufe
- 211: Prozess-Beschreibung
- 212: FM(1) Deployment
- 22: Opakes System (Digitaler Zwilling)
- 23: FM (2) Deployment
- 24: System Interpreter
- 25: Auswertungsmodul
- 26: Korrigierte System-Logik
- 27: Korrektursignal
- 30: Korrektursignal
- DB: DatenBank
- 40: Markierungs-Modul
- 401: Semantische Segmentierung
- 402: Markierung Segmentierter Regionen
- 403: Vergleich mit Modell Logik
- 41: Eingabe Beispiel
- 42: System Logik
- 43: System Vorhersage

## Patentansprüche

1. Computerimplementiertes Verfahren zur Adaption des Verhaltens eines opaken Systems, mit einem maschinellem Lernmodell (11) zur Durchführung einer Analyseaufgabe in einem technischen System (10),
Auswerten von Eingabe-Daten aus dem opaken System durch einen Systeminterpreter (24) und Generieren einer Erklärung einer Schlussfolgerung des opaken Systems der Eingabe-Daten,
Generieren von Korrekturwerten zu der Schlussfolgerung mit den Eingabe-Daten durch ein Grundlagenmodell (FM, 212) welches nicht aufgabenspezifisch vortrainiert ist, in der Korrekturstufe (21)
Bewerten (25) der Interpretation und den Korrekturen und generieren eines Korrektursignal basierend auf der ermittelten Differenz der Interpretation und den Korrekturen Rückgabe des Korrektursignals an das opake System (30), zur Adaption des opaken Systems durch Zurückspielen des angepassten opaken Systems in das technische System.

2. Computerimplementiertes Verfahren gemäß Patentanspruch 1, **dadurch gekennzeichnet, dass**
es sich bei dem technischen System um ein industrielles Produktionssystem zur Herstellung von Gütern handelt.

3. Computerimplementiertes Verfahren gemäß Patentanspruch 1 oder 2, **dadurch gekennzeichnet, dass**
die verwendeten Eingabedaten Bilder umfassen und das Grundlagenmodell (FM, 212) ein LVLM ist.

4. Computerimplementiertes Verfahren gemäß einem der vorherigen Patentansprüche, **dadurch gekennzeichnet, dass**
die Interpretation und die Korrekturwerte mit einem LLM kodiert und der Abstand über ein gängiges Abstandsmaß als Maß für die Differenz zwischen den Schlussfolgerungen in natürlicher Sprache erzeugt wird.

5. Computerimplementiertes Verfahren gemäß einem der vorherigen Patentansprüche, **dadurch gekennzeichnet, dass**
dem GrundlagenModell (FM, 212) anwendungsspezifischen Dokumenten bereitgestellt werden oder es darauf trainiert wurde, insbesondere Domänenwissen für industrielle Anlagen aus Beschreibungen der Operational Design Domain (ODD).

6. Computerimplementiertes Verfahren gemäß einem der vorherigen Patentansprüche, **dadurch gekennzeichnet, dass**
die verwendeten Eingabedaten für das Opake System in einer Datenbank (DB) in der Cloud gespeichert werden.

7. Computerimplementiertes Verfahren gemäß Patentanspruch 6, **dadurch gekennzeichnet, dass**
eine Auswahl (14) der in der Datenbank zu speichernden Eingabedaten abhängig ist von einem Maß, das die Unsicherheit des Systems über die Vorhersage für die jeweilige Instanz quantifiziert.

8. Computerimplementiertes Verfahren gemäß Patentanspruch 6 oder 7, **dadurch gekennzeichnet, dass**
das System-Reasoning mehrerer Eingabebeispiele jeweils zu einem Prototypischen Datensatz in der Datenbank zusammengefasst wird.

9. Computerimplementiertes Verfahren gemäß einem der vorherigen Patentansprüche, **dadurch gekennzeichnet, dass**
die Schritte so oft ausgeführt werden, bis
- die Leistung des angepassten Modells die für die Anwendung angegebenen Anforderungen erfüllt, oder
- alle Eingangsdaten aus der Datenbank verwendet werden, oder
- ein vordefiniertes Budget für die Anzahl der Anpassungen erschöpft ist.

10. Computerimplementiertes Verfahren gemäß einem der vorherigen Patentansprüche, **dadurch gekennzeichnet, dass**
das Generieren von Korrekturwerten zu der Schlussfolgerung im Bildraum erfolgt, wobei die Bild-Daten in Bereiche eingeteilt sind, wobei jeder Bereich eine eindeutige Kennung erhält und für die weitere Betrachtung nur diejenigen Bereiche ausgewählt werden die zuvor als relevant erachtet wurden.

11. Computerimplementiertes Verfahren gemäß einem der vorherigen Patentansprüche, **dadurch gekennzeichnet, dass**
ein weiteres Grundlagenmodell (23) verwendet wird.

12. Computerprogrammprodukt geeignet zur Durchführung der Merkmale des Verfahrens gemäß einem der Patentansprüche 1 bis 11.

13. Assistenzsystem (20) zur Adaption eines Verhaltens eines opaken Systems,
mit einem maschinellem Lernmodell (11) zur Durchführung einer Analyseaufgabe in einem technischen System (10),
- mit einem Systeminterpreter (24) zum Auswerten von Eingabe-Daten aus dem opaken System und Generieren einer Erklärung einer Schlussfolgerung des opaken Systems der Daten
- mit einer Korrekturstufe (21) zum Generieren von Korrekturwerten zu der Schlussfolgerung mit den Eingabe-Daten durch ein Grundlagenmodell (FM, 212) welches nicht aufgabenspezifisch vortrainiert ist,
- mit einem Auswertungsmodul zum Bewerten (25) der Interpretation und den Korrekturen und generieren eines Korrektursignal basierend auf der ermittelten Differenz der Interpretation und den Korrekturen,
- und einem Modul (22) zur Rückgabe des Korrektursignals an das opake System (30), zur Adaption.

14. Assistenzsystem (20) gemäß Patentanspruch 13, **dadurch gekennzeichnet, dass** es sich bei dem technischen System um ein industrielles Produktionssystem zur Herstellung von Gütern handelt.

15. Assistenzsystem (20) gemäß Patentanspruch 13 oder 14, **dadurch gekennzeichnet, dass** die verwendeten Eingabedaten Bilder umfassen und das Grundlagenmodell (FM, 212) ein LVLM ist.

16. Assistenzsystem (20) gemäß einem der vorherigen Patentansprüche 13 bis 15, **dadurch gekennzeichnet, dass**
die Interpretation und die Korrekturwerte semantisch mit einem LLM kodiert und der Abstand über ein gängiges Abstandsmaß als Maß für die Differenz zwischen den Schlussfolgerungen in natürlicher Sprache erzeugt wird.

17. Assistenzsystem (20) gemäß einem der vorherigen Patentansprüche 13 bis 16, **dadurch gekennzeichnet, dass**
das Grundlagenmodell (FM, 212) vorher mit anwendungsspezifischen Dokumenten trainiert wurde, insbesondere Domänenwissen für industrielle Anlagen aus Beschreibungen der Operational Design Domain (ODD).

18. Assistenzsystem (20) gemäß einem der vorherigen Patentansprüche 14 bis 17, **dadurch gekennzeichnet, dass**
die verwendeten Eingabedaten für das Opake System in einer Datenbank (DB) in der Cloud gespeichert werden.

19. Assistenzsystem (20) gemäß Patentanspruch 18, **dadurch gekennzeichnet, dass** eine Auswahl (14) der in der Datenbank zu speichernden Eingabedaten abhängig ist von einem Maß, das die Unsicherheit des Systems über die Vorhersage für die jeweilige Instanz quantifiziert.

20. Assistenzsystem (20) gemäß Patentanspruch 18 oder 19, **dadurch gekennzeichnet, dass** das System Reasoning genutzt wird, um mehrere Eingabebeispiele zu Clustern zusammenzufassen und prototypische Repräsentanten für die weitere Verarbeitung zu nutzen, um Rechenanforderungen zu reduzieren.

21. Assistenzsystem (20) gemäß einem der vorherigen Patentansprüche 18 bis 20, **dadurch gekennzeichnet, dass**
ein weiteres Grundlagenmodell (23) verwendet wird.
